# EUROPEAN PATENT SPECIFICATION

(11) **EP 4 407 236 B1**
(45) Date of publication and mention of the grant of the patent: **06.08.2025**
(21) Application number: 24151001.5
(22) Date of filing: 09.01.2024
(51) Int. Cl.: F24C 3/12, H01H 3/10, F16K 3/08, G05G 1/12, F16K 37/00, H01H 3/16

(54) **ROTOR FOR GAS HOB CONTROL**
ROTOR FÜR GASKOCHFELDSTEUERUNG
ROTOR POUR COMMANDE DE PLAQUE DE CUISSON À GAZ

(30) Priority: 24.01.2023 EP 23382057
(43) Date of publication of application: 31.07.2024
(73) Proprietor: BSH Hausgeräte GmbH, 81739 München (DE)
(72) Inventor: Martinez Diez, Alvaro, 39011 Peñacastillo (Santander) (ES); Herrera Ruiz, Alfonso, 39600 Maliaño (Cantabria) (ES); Placer Maruri, Emilio, 39120 Liencres (ES)

(56) References cited:
- EP-A2- 2 383 519
- WO-A1-2017/161405
- WO-A1-2021/228830
- CN-A- 104 566 518
- GB-A- 2 130 438
- US-B2- 7 285 738

## Description

The present invention relates to a rotor device for a gas hob control arrangement. The present invention also relates to a gas hob control arrangement with such a rotor device. One type of gas hob control arrangement has a single handle as a user interface. The user can adjust a gas flow to a burner by turning the handle. Further, the user can ignite the gas at the burner by pressing the handle. In this configuration, the rotor device serves as an angle-independent actuator for an ignition switch device.

Gas hob controls are often exposed to liquids that non-intentionally trickle into the controls. Thus, there is a need for fast and reliable drainage within the respective control arrangements.

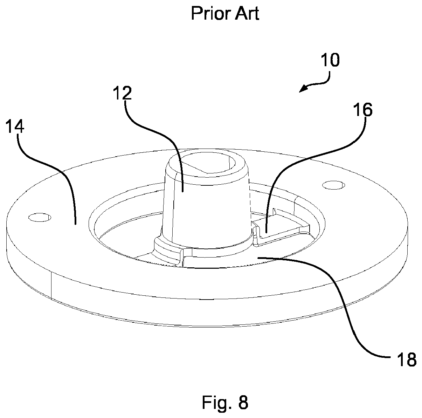

Fig. 8 shows a prior art rotor device 10 having a hub 12 for receiving a shaft (not shown) and a ring body 14. The hub 12 is connected to the ring body 14 via beams 16 thereby forming drainage passages 18. A return spring (not shown) abuts a lower face of the hub 12 for urging the rotor device 10 upwards. In order to make the gas hub controls more compact, the return spring is to be accommodated partly in the hub 12. This would increase a diameter of the hub 12 which in return would reduce a size of the drainage passage 18. However, as smaller drainage passages 18 would deteriorate a drainage behavior, a different approach is sought for.

WO 2021/228830 A1 describes a stove having a gas valve with an actuation stem for actuating the gas valve. An actuation knob actuates the actuation stem, and a connection element couples the knob to the stem. The knob is connected to the connection element in a form-locking manner, so that the knob is removable from the stove for maintenance purposes.

It is one object of the present invention to provide a rotor device for a smaller gas hub control arrangement but with improved drainage behavior.

Accordingly, a rotor device for a gas hob control arrangement is proposed. The rotor device has a collar, a ring body, and at least on arm. The collar forms an opening. The collar is configured to transfer a rotating and/or translating movement between the rotor device and a shaft device, which is receivable in the opening. The ring body has a larger inner diameter than a width of the opening. The at least one arm comprises an outer arm section, an inner arm section, and a central arm section. The outer arm section extends from the ring body radially inwards. The inner arm section extends from the collar radially outwards. The central arm section extends from a radially inner end of the outer arm section axially to a radially outer end of the inner arm section.

In other words, a shaft device is receivable in the opening of the collar, and when a shaft device is received in the opening of the collar, then a rotating and/or translating movement is transferable between the collar and the received shaft device.

In other words, the outer arm section protrudes radially inwards from an inner peripheral surface of the ring body.

In other words, the inner arm section protrudes radially outwards from an outer peripheral surface of the collar.

The one or more arms are forming a loop to the collar, which is placed at a different level along a central axis than the ring body. This loop allows for a more compact configuration of a resulting gas hob control arrangement. Further, as the collar is held to the ring body only by means of the one or more arms, there are formed one or more drainage passages in between. Thus, a satisfying drainage behavior is achieved.

The terms inner arm section and outer arm section are names meant for easier discrimination. As the collar preferably is smaller than the ring body, the arm section, which protrudes from the collar is referred to as the inner arm section. Corresponding thereto, the arm section, which protrudes from the preferably larger ring body is the outer arm section. However, an inner end of the outer arm section will in most case be closer to a central axis than an outer end of the inner arm section.

Although the number and placement of arms is not restricted in general, a symmetrical arrangement is preferred. For example, two arms with a relative spacing of 180° around the central axis, or three arms with a relative spacing of 120° around the central axis are preferred variants.

If the rotor device has two or more arms, these arms preferable are shaped identical for endurance reasons.

The three arm sections may consecutively follow a path. Thus, the number of arm sections per arm can be limited to an easy-to-manufacture configuration.

The arm sections may extend linearly. Thus, a bending behavior of the arm sections can easily be predetermined. However, at least one arm section may extend along a curve when viewed in a side view, in order to provide an adjustable bending behavior.

According to one option, the arm sections are connected by sharp intersections. That is, the arm sections may follow a z-path. This option allows for fast drainage. According to another option, the arm sections merge with rounded edges. That is, the arm sections may follow a s-path. This option minimizes residue adherence.

According to one option, each arm section has a constant width along its path. This option provides a constant stiffness of the respective arm.

According to another option, at least one of the three arm sections has a varying width along its path. This option allows for increased damping behavior.

It is preferred if the outer arm section has a declined surface on a collar-side. That is, a side oriented towards the collar instead of away from the collar preferably has a roof-shaped top surface. In other words, a prism-shaped cross section is suggested. This option facilitates running off of any liquids from the arm section top side.

According to another option, the rotor device may be integrally formed for increased strength. Preferred materials comprise metal alloys and plastic materials.

Optionally, at least one arm section may have a declined top surface, when the collar is positioned above the ring body in a mounted position. That is, the relative position of the collar relative to the ring body defines an upwards direction. By providing that the at least one arm section has a downwards inclined top surface, liquids easier run down from this arm section.

A radius from a rotation axis of the rotor device to an inner end of the outer arm section or to every inner end of the outer arm sections may be larger than the width of the opening of the collar. This allows for an installation space for a spring device, which encompasses a shaft device.

The collar may have a front face facing towards the ring body. The front face is a preferred bearing surface for a spring device.

According to a preferred option, the rotor device has a hollow-cylindrical space in an empty space, that is defined by an axially parallel projection of the opening in the collar, inner faces and/or edges of the arm sections, a front face of the collar facing towards the ring body, and a front face of the ring body facing away from the collar. Thus, a ring-shaped spring device like a coils spring or a bellows-shaped arrangement of disc springs can reliably be accommodated.

The inner arm section may extend both radially outwards from the collar and axially away from the ring body. That is, it may be inclined such that it extends both radially outwards from the collar and axially away from the ring body. This results in an elastic behavior of the arm(s), which is desired for some applications.

Elasticity, flexibility and/or bending of the arm(s) has the advantage that small misalignments between the shaft device and other parts of the gas hub control arrangement can be self-compensated by the arm behavior.

Alternatively, the inner arm section may extend both radially outwards from the collar and axially towards the ring body, wherein an angle between the rotation axis of the rotor device and the inner arm section is larger than an angle between the rotation axis and the central arm section. That is, the inner arm section may be inclined such that it extends both radially outwards from the collar and axially towards the ring body.

To increase flexibility, the central arm section may extend both axially away from the ring body and radially outwards. That is, the central arm section may be inclined outwards / declined inwards.

The rotor device according to any of the above variants may be provided as a backfitting part for improving a drainage of an existing gas hob control arrangement.

According to another aspect of the invention, a gas hob control arrangement for controlling a gas hob is proposed. The gas hob control arrangement has a shaft device, the above rotor device, a spring device, and an ignition switch device. The shaft device defines a rotation axis of the gas hob control arrangement. The opening of the collar receives the shaft device to be rotatable by a rotation of the shaft device. The rotor device is movable along the rotation axis between an idle position and a deflected position of the ring body. The spring device is arranged radially between the shaft device and the outer arm section or outer arm sections of the rotor device. The spring device preloads the rotor device from the deflected position towards the idle position. The ignition switch device is configured to supply electricity to an ignition device in a state where the ring body is in the deflected position. The embodiments and features described with reference to the rotor device apply mutatis mutandis to the control arrangement having this rotor device.

The control arrangement may comprise an angle sensor that is configured to detect a rotation angle of the rotor device and to transmit a control signal indicative of the rotation angle electronically to a valve device to open or close a gas passage. Thus, an electronic simmering control can be implemented.

The control arrangement may comprise a valve device, that is configured to be actuated by a rotation of the shaft device to open or close a gas passage. Thus, the valve device is directly controllable for increased reliability.

The control arrangement may comprise a protective cap and an electronics device. The protective cap has a through hole and a recess. The electronics device is housed in the recess. The rotor device is arranged such that the collar and/or the at least one arm reaches into the through hole at least when the ring body is in the idle position. The rotor device is arranged such that the recess opens towards the ring body. The rotor device is arranged such that the ring body is located adjacent to the electronics device when the ring body is in the idle position. Thus, the protective cap protects the electronics from liquids trickling into the control arrangement, while the electronics device is arranged close to the rotor to precisely detect user commands. Further, rotor device may be arranged such that the ring body is separated from the electronics device when the ring body is in the deflected position. This option combines an easy deflection detection with a break-up of any capillary effects between the electronics and the ring body.

The control arrangement may include a handle for user inputs. The handle may be formed integrally with the shaft device for endurance.

The scope of the invention is defined by claim 1. Preferred embodiments are defined by the depending claims.

Further embodiments, features and advantages of the present invention will become apparent from the subsequent description and dependent claims, taken in conjunction with the accompanying drawings, in which:
- Fig. 1: schematically show a cross section of a gas hob control arrangement according to a first embodiment of the invention;
- Fig. 2: schematically shows a perspective view on a rotor device according to the first embodiment;
- Fig. 3: schematically shows a side view on the rotor device according to the first embodiment;
- Fig. 4: schematically shows another side view on the rotor device according to the first embodiment;
- Fig. 5: schematically shows a top view on the rotor device according to the first embodiment;
- Fig. 6: schematically shows a perspective view on a rotor device according to a second embodiment of the invention;
- Fig. 7: schematically shows an enlarged section of Fig. 6; and
- Fig. 8: shows a rotor device according to prior art.

In the Figures, like reference numerals designate like or functionally equivalent elements, unless otherwise indicated.

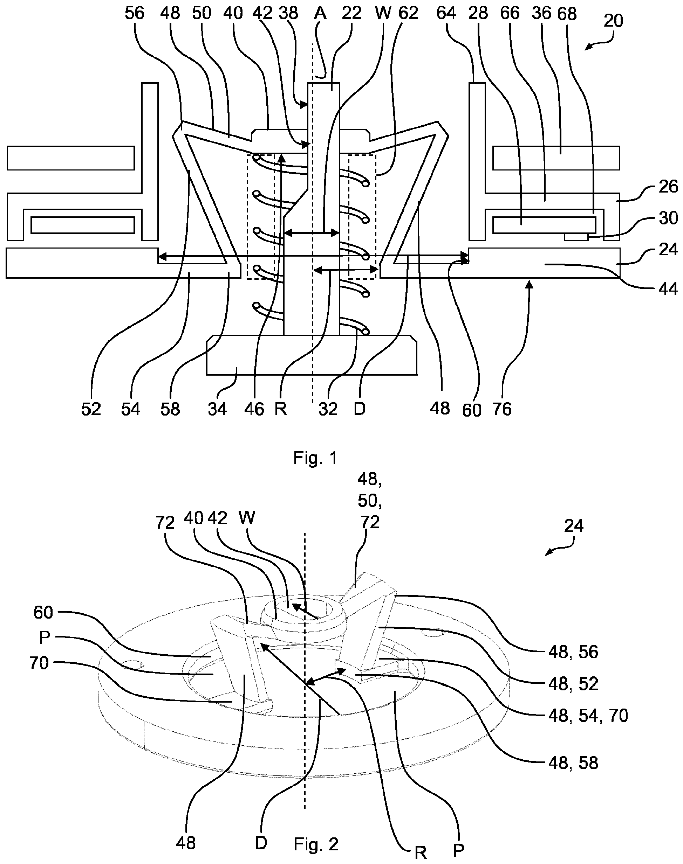

A first embodiment of the invention is described, which is illustrated in Figs. 1 to 5.

A gas hob control arrangement 20 for controlling a gas hob (not shown) has a shaft device 22, a rotor device 24, a protective cap 26, a spring device 32, a valve device 34, a case 36, and an electronics device 28 having an ignition switch device 30. The case 36 supports the valve device 34 and the protective cap 26, for example.

The shaft device 22 defines a rotation axis A, that may also be referred to as central axis A. Indications like a radial direction or an axial direction refer to this rotation axis A, which also is a rotation axis of the rotor device 24.

Preferably, the shaft device 22 is integrally formed to be a single shaft. For torque transfer, the shaft device 22 may have a chamfer 38.

The rotor device 24 has a collar 40, in which an opening 42 is formed. The opening 42 is a through hole that fits the shaft device 22 having the chamfer 38. For example, the opening 42 and the shaft device 22 form a tight fit. In other words, a cross section of the opening 42 is a negative of one cross section of the shaft device 22. The collar 40 forms a ring surrounding the shaft device 22.

The collar 40 acts as a hub for the shaft device 22. In other words, the collar 40 and the shaft device 22 form a shaft-hub-joint, by means of which a rotation and/or movement is transferable between the shaft device 22 and the collar 40.

The rotor device 24 has a ring body 44. In a simple configuration, the ring body 44 solely serves as an actuator or to-be-detected body for a detection function of the ignition switch device 30. The ring body 44 preferably has a shape of a flat hollow cylinder.

An inner diameter D of the ring body 44 is larger than a width W of the opening 42. The width W of the opening 42 corresponds to a diameter of the shaft device 22 at the location of the collar 42.

The rotor device 24 may serve further functions for the electronics device 28, such as an entry device for entering a simmering level into an electronic valve control.

The ring body 44 and the collar 40 are axially offset to accommodate the long spring device 32 between the rotor device 24 and the valve device 34. That is, the spring device 32 is interposed between the collar 40 and the valve device 34. Thus, the rotor device 24 according to the invention can be arranged closer to valve device 34, which results in the desired smaller gas hob control arrangement 10. In alternative embodiments of the invention, the spring device 32 might be interposed between the collar 40 and a part of the case 36.

In the embodiments, the spring device 32 is shown as a coil spring, which is the preferred type of spring device 32. However, in alternative embodiments, the spring device 32 might be of a different type, such as an elastomer tube and/or one or more disc springs.

The spring device 32 abuts a front face 46 of the collar 40. The front face 46 is oriented axially towards the valve device 34 and/or the ring body 44.

The collar 40 and the ring body 44 are connected by two arms 48. In alternative embodiments, there might be one, three or more arms 48. Preferably, the arms 48 are symmetrically arranged around the rotation axis A, wherein symmetrically preferably means that a (virtual) axial displacement of the ring body 44 relative to the collar 40 keeps an alignment between the ring body 44 and the collar 40. It is even more preferred to have the arms 48 evenly, equidistantly and/or equiangularly arranged.

Circumferentially between the arms 48 are drainage passages P. These drainage passages P ensure a desired drainage behavior.

Each of the arms 48 has three arm sections: an inner arm section 50, a central arm section 52, and an outer arm section 54. Preferably, the three arm sections 50, 52, 54 are consecutive. The inner arm section 50 and the central arm section 52 are preferably connected by a first joint 56. The outer arm section 54 and the central arm section 52 are preferably connected by a second joint 58. The joints 56, 58 may be formed by intersections of two respective arm sections 50, 52, 54.

The inner arm section 50 protrudes radially outwards from the collar 40. That is, the collar 40 forms a radially inner end of the inner arm section 50, and the first joint 56 forms a radially outer end of the inner arm section 50.

Additionally, the inner arm section 50 is optionally inclined. In other word, the inner arm section 50 extends radially and axially at the same time. Preferably, the inner arm section 50 extends away from the ring body 44 as it extends from the collar 40 to the first joint 56.

The outer arm section 54 protrudes radially inwards from an inner peripheral surface 60 of the ring body 44. That is, the ring body 44 forms a radially outer end of the outer arm section 54, and the second joint 58 forms a radially inner end of the outer arm section 54.

The central arm section 52 connects both joints 56, 58. That is, the central arm section 52 extends between the radially inner end of the outer arm section 54 and the radially outer end of the inner arm section 50. As these joints 56, 58 have an axial offset, the central arm section 52 extends axially to bridge this offset.

In this embodiments, the central arm section 52 is inclined. That is, it extends both radially and axially. In the case of the first embodiment, the central arm section 52 extends radially outwards while extending from the radially inner end of the outer arm section 54, being the second joint 58, to the radially outer end of the inner arm section 50, being the first joint 56.

A circle, which is concentric with the central axis 22 of the rotor device 24, and which is tangential to the innermost edge and/or surface of the outer arm section 54, has a radius R. The radius R is larger than an outer diameter of the shaft device 22 to provide a radial gap for the spring device 32. The width W of the opening 42 usually corresponds to the diameter of the shaft device 22. Thus, it is preferred if the radius R is larger than half the width W.

The rotor device 24 defines a hollow-cylindrical space 62, which is an installation space for the spring device 22. The hollow-cylindrical space 62 is designed into the rotor device 24. In other words, the hollow-cylindrical space 62 is a virtual space that is present in the empty space between the collar 40, ring body 44 and arms 48. The hollow-cylindrical space 62 is radially outside of a projection of the opening 42, that is projected parallel to the central axis 22. The hollow-cylindrical space 62 is radially inside inner faces and/or edges of the arms 48. In the embodiments, the hollow-cylindrical space 62 is radially inside an inner face of the second joints 58. The hollow-cylindrical space 62 extends axially between the front face 46 of the collar 40 facing towards the ring body 44 and a front face 76 of the ring body 44 facing away from the collar 40.

In the gas hob control arrangement 20, the hollow-cylindrical space 62 is radially outside of the shaft device 22.

The arms 48 of the embodiments may have inclined arm sections for increased flexibility to be self-balancing. Thus, a potential misalignment of the shaft device 22 to the electronics device 28 can be auto-compensated.

In this embodiment, the central arm section 52 is inclined outwards. That is, the central arm section 52 extends radially outwards while extending axially from the radial inner end 58 of the outer arm section 54 to the radial outer end 56 of the inner arm section 50. When mounted, the inner arm section 50 is inclined upwards. That is, the inner arm section 50 extends axially away from the ring body 44 while extending radially outwards from the collar 40 to the radial outer end 56 of the inner arm section 50. Since the inner arm section 50 is inclined, all liquids that may land on the inner arm section 50 run down towards the collar 40. At this point, chamfers from both sides of the inner arm section 50 meet in the middle, such that liquids do not rest upon the inner arm section 50. That is, the inner arm section 50 has a declined top surface 72 to improve drainage.

The protective cap 26 has a cylindrical section 64, which defines a through hole 74 to encompass the arms 48 and/or the collar 40. At one end of the cylindrical section 64, there is a ring section 66. In the ring section 66 there is a ring-shaped recess 68. The electronics device 28 is accommodated in the recess 68.

The recess 68 houses the electronics device 28 radially inside, radially outside, and at one axial side. That is, the recess 68 is open at the other axial side. The ring body 24 is axially movable between an idle position and an activated position. In the idle position, the ring body 24 is located adjacent to the open side of the recess 68. Thus, the ring body 24 is arranged adjacent to the electronics device 28, when the ring body 24 is in the idle position. The idle position is depicted in Fig. 1. The ignition switch device 30, which is connected to the electronics deice 28, detects the ring body 24, when the ring body 24 is in the idle position.

Preferably, there is a handle (not shown) affixed to an upper end of the shaft device 22 in Fig. 1. When a user presses the handle towards the valve device 34, the ring body 24 is moved from the idle position towards the activated position. When the ignition switch device 30 detects that the ring body 24 is not in the idle position and/or is in the activated position, the ignition switch device 30 supplies an electric signal to an ignition device (not shown) to ignite a gas flowing from a burner. When the user releases a pressure on the handle, the spring device 32 pushes the rotor device 24 back into the idle position.

The spring device 32 preferably is configured to exert a preload onto the collar 40, when the rotor device 24 is in the idle position. That configuration ensures that the ring body 24 is reliably positioned in the idle device.

When a user rotates the handle to adjust a gas flow from the valve device 34, the ring body 44 rotates around the rotation axis 22. As the ring body 44 is symmetrical to the rotation axis 22, the ignition switch device 30 is operatable by the ring body 44 at every angular position.

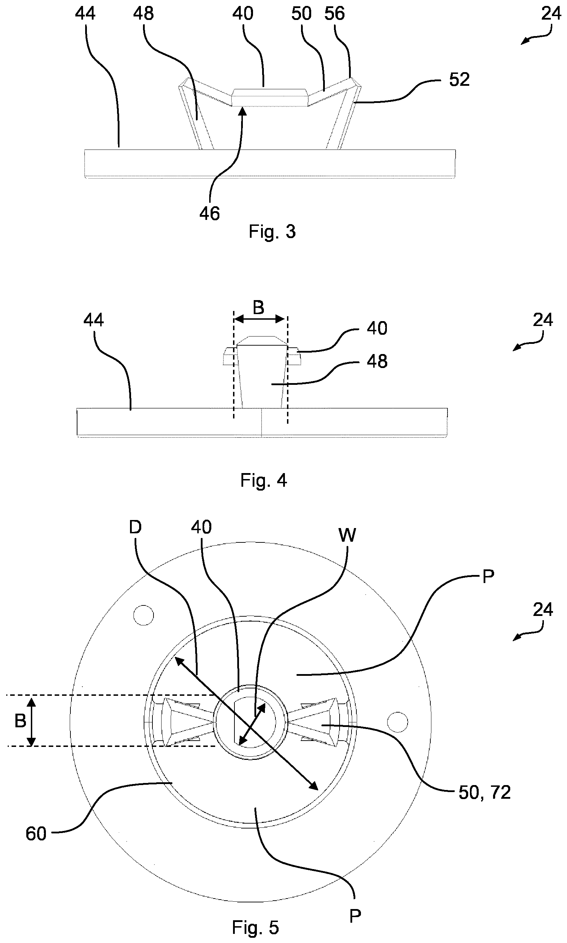

As can be appreciated best from the side view of Fig. 4 and the top view of Fig. 5, the central arm section 52 and the inner arm section 50 have a varying section width B. As to the inner arm section 50, its section width B decreased linearly from the first joint 56 to the collar 40. As to the central arm section 48, its section width B decreases linearly from the first joint 56 to the second joint 58. This variation in section width B provides a variation in bending strength, which increases a flexibility of the arms 48 without weakening the joints 56, 58.

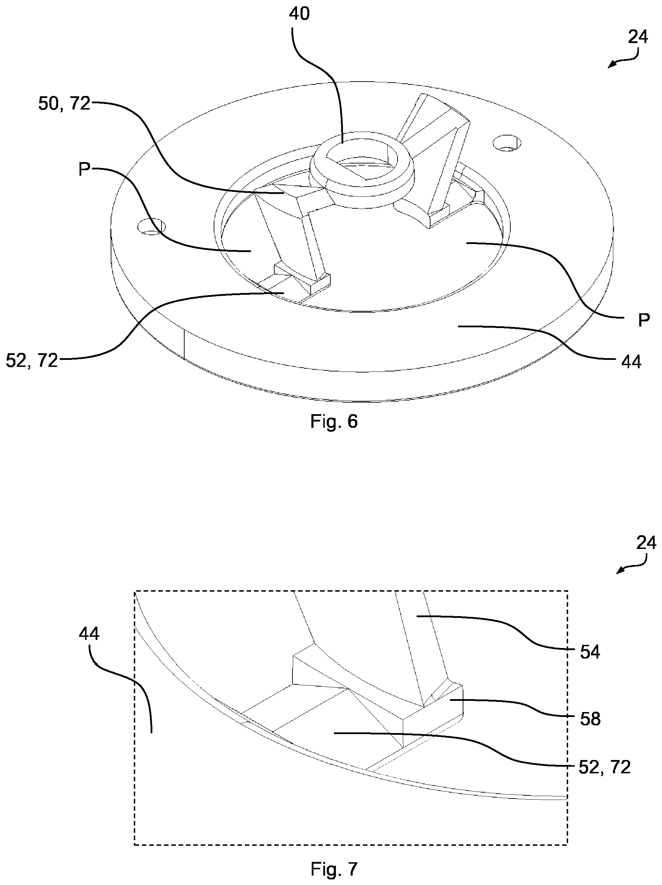

Next, a second embodiment of the invention is described with respect to Figs. 6 and 7. The rotor device 24 of the second embodiment corresponds to the rotor device 24 of the first embodiment except for a shape of the outer arm sections 54. Thus, reference is made to the description of the first embodiment in all other regards.

The outer arm sections 54 of the first embodiment have a rectangular cross section when cut tangentially. Thus, they have an increased strength but also a flat top surface 70 on which liquids may rest upon without completely draining. See Fig. 2 for example.

The outer arm sections 54 of the second embodiment have a nearly triangular cross section, when cut tangentially. The triangular cross section is an example for a prism-shaped cross section. Thus, the outer arm sections 54 according to the second embodiment have declined top surfaces 72. Due thereto, any liquid runs down from the outer arm sections 54, which is why a drainage behavior is improved.

Although the present invention has been described in accordance with preferred embodiments, it is obvious for the person skilled in the art that modifications are possible in all embodiments.

### Reference Numerals:

- A: rotation axis / central axis
- B: section width
- D: inner diameter
- P: drainage passage
- R: radius
- W: width
- 10: rotor device
- 12: hub
- 14: ring body
- 16: beam
- 18: drainage passage
- 20: gas hob control arrangement
- 22: shaft device
- 24: rotor device
- 26: protective cap
- 28: electronics device
- 30: ignition switch device
- 32: spring device
- 34: valve device
- 36: case
- 38: chamfer
- 40: collar
- 42: opening
- 44: ring body
- 46: front face of collar
- 48: arm
- 50: inner arm section
- 52: central arm section
- 54: outer arm section
- 56: first joint
- 58: second joint
- 60: inner peripheral surface of the ring body
- 62: hollow-cylindrical space
- 64: cylindrical section
- 66: ring section
- 68: recess
- 70: flat top surface
- 72: declined top surface
- 74: through hole
- 76: front face of ring body

## Claims

1. A rotor device (24) for a gas hob control arrangement (20), comprising:
a collar (40), that forms an opening (42) and is configured to transfer a rotating and/or translating movement between the rotor device (24) and a shaft device (22) receivable in the opening (42),
a ring body (44), that has a larger inner diameter (D) than a width (W) of the opening (42), and
at least one arm (48) comprising:
an outer arm section (54), which extends radially inwards from the ring body (44),
an inner arm section (50), which extends radially outwards from the collar (40), and
a central arm section (52), which extends axially from a radially inner end (58) of the outer arm section (54) to a radially outer end (56) of the inner arm section (50).

2. The rotor device (24) according to claim 1, wherein, when the collar (40) is positioned above the ring body (44) in a mounted position, at least one arm section (50, 52, 54) has a declined top surface (72).

3. The rotor device (24) according to any preceding claim, wherein a radius (R) from a rotation axis (A) of the rotor device (24) to an inner end of the outer arm section (54) or to every inner end of the outer arm sections (54) is larger than half the width (W) of the opening (42).

4. The rotor device (24) according to any preceding claim, comprising a hollow-cylindrical space (62) in an empty space, that is defined by an axially parallel projection of the opening (42) in the collar (40), inner faces and/or edges of the arm sections (50, 52, 54), a front face (46) of the collar (40) facing towards the ring body (44), and a front face (76) of the ring body (44) facing away from the collar (40).

5. The rotor device (24) according to any preceding claim, wherein the central arm section (52) extends radially outwards while extending from the radially inner end (58) of the outer arm section (54) to a radially outer end (56) of the inner arm section (50).

6. The rotor device (24) according to any preceding claim, wherein the inner arm section (50) is inclined such that it extends both radially outwards from the collar (40) and axially away from the ring body (44).

7. The rotor device (24) according to any preceding claim, wherein the central arm section (52) is inclined such that it extends radially outwards while it extends axially away from the ring body (44) .

8. A gas hob control arrangement (20) for controlling a gas hob, comprising:
a shaft device (22) defining a rotation axis (A),
a rotor device (24) according to any preceding claim, wherein the opening (42) of the collar (40) receives the shaft device (22) to be rotatable around the rotation axis (A) by a rotation of the shaft device (22), and wherein the rotor device (24) is movable along the rotation axis (A) between an idle position and a deflected position of the ring body (44), and
a spring device (32), that is arranged radially between the shaft device (22) and the outer arm section (54) or outer arm sections (54) of the rotor device (24), and that preloads the rotor device (24) from the deflected position towards the idle position, and
an ignition switch device (30), that is configured to supply electricity to an ignition device in a state where the ring body (44) is in the deflected position.

9. The gas hob control arrangement (20) according to claim 8, further comprising a valve device (34), that is configured to be actuated by a rotation of the shaft device (22) to open or close a gas passage.

10. The gas hob control arrangement (20) according to claims 8 or 9, further comprising
a protective cap (26), that has a through hole (74) and a recess (68), and
an electronics device (28), that is housed in the recess (68),
wherein the collar (40) and/or the at least one arm (48) reaches into the through hole (74) at least when the ring body (44) is in the idle position,
wherein the recess (68) opens towards the ring body (44), and
wherein the ring body (44) is adjacent to the electronics device (28) when the ring body (44) is in the idle position.

## Patentansprüche

1. Drehvorrichtung (24) für eine Gasmuldenbedienanordnung (20) mit Folgendem:
einem Kragen (40), der eine Öffnung (42) bildet und so ausgelegt ist, dass er eine Dreh- und/oder Verschiebebewegung zwischen der Drehvorrichtung (24) und einer in der Öffnung (42) aufnehmbaren Wellenvorrichtung (22) überträgt,
einem ringförmigen Hauptteil (44), dessen Innendurchmesser (D) größer ist als eine Breite (W) der Öffnung (42), und
mindestens einem Arm (48), der Folgendes umfasst:
einen äußeren Armabschnitt (54), der von dem ringförmigen Hauptteil (44) aus radial nach innen verläuft,
einen inneren Armabschnitt (50), der von dem Kragen (40) aus radial nach außen verläuft, und
einen mittleren Armabschnitt (52), der von einem radial innenliegenden Ende (58) des äußeren Armabschnitts (54) axial zu einem radial außenliegenden Ende (56) des inneren Armabschnitts (50) verläuft.

2. Drehvorrichtung (24) nach Anspruch 1, wobei, wenn der Kragen (40) in einer Montageposition über dem ringförmigen Hauptteil (44) positioniert ist, mindestens ein Armabschnitt (50, 52, 54) eine geneigte obere Fläche (72) aufweist.

3. Drehvorrichtung (24) nach einem der vorhergehenden Ansprüche, wobei ein Radius (R) von einer Rotationsachse (A) der Drehvorrichtung (24) zu einem innenliegenden Ende des äußeren Armabschnitts (54) oder zu jedem innenliegenden Ende der äußeren Armabschnitte (54) mehr als die Hälfte der Breite (W) der Öffnung (42) beträgt.

4. Drehvorrichtung (24) nach einem der vorhergehenden Ansprüche, die einen hohlzylindrischen Raum (62) in einem Leerraum umfasst, der durch eine axial parallel verlaufende Projektion der Öffnung (42) in dem Kragen (40), Innenflächen und/oder -ränder der Armabschnitte (50, 52, 54), eine zu dem ringförmigen Hauptteil (44) weisende Stirnfläche (46) des Kragens (40) und eine von dem Kragen (40) weg weisende Stirnfläche (76) des ringförmigen Hauptteils (44) definiert ist.

5. Drehvorrichtung (24) nach einem der vorhergehenden Ansprüche, wobei der mittlere Armabschnitt (52) in seinem Verlauf von dem radial innenliegenden Ende (58) des äußeren Armabschnitts (54) zu einem radial außenliegenden Ende (56) des inneren Armabschnitts (50) radial nach außen verläuft.

6. Drehvorrichtung (24) nach einem der vorhergehenden Ansprüche, wobei der innere Armabschnitt (50) so geneigt ist, dass er sowohl von dem Kragen (40) radial nach außen als auch axial von dem ringförmigen Hauptteil (44) weg verläuft.

7. Drehvorrichtung (24) nach einem der vorhergehenden Ansprüche, wobei der mittlere Armabschnitt (52) so geneigt ist, dass er radial nach außen sowie axial von dem ringförmigen Hauptteil (44) weg verläuft.

8. Gasmuldenbedienanordnung (20) zum Bedienen einer Gasmulde mit Folgendem:
einer Wellenvorrichtung (22), die eine Rotationsachse (A) definiert,
einer Drehvorrichtung (24) nach einem der vorhergehenden Ansprüche, wobei die Öffnung (42) des Kragens (40) die Wellenvorrichtung (22) so aufnimmt, dass diese durch Drehen um die Rotationsachse (A) drehbar ist, und die Drehvorrichtung (24) entlang der Rotationsachse (A) zwischen einer Ruheposition und einer ausgelenkten Position des ringförmigen Hauptteils (44) beweglich ist, und
einer Federvorrichtung (32), die radial zwischen der Wellenvorrichtung (22) und dem äußeren Armabschnitt (54) oder äußeren Armabschnitten (54) der Drehvorrichtung (24) angeordnet ist und die Rotorvorrichtung (24) aus der ausgelenkten Position in die Ruheposition vorspannt, und
einer Zündschaltervorrichtung (30), die so ausgelegt ist, dass sie eine Zündvorrichtung in einem Zustand, in dem sich der ringförmige Hauptteil (44) in der ausgelenkten Position befindet, mit Strom versorgt.

9. Gasmuldenbedienanordnung (20) nach Anspruch 8, die ferner eine Ventilvorrichtung (34) umfasst, die so ausgelegt ist, dass sie sich durch Drehen der Wellenvorrichtung (22) zum Öffnen oder Schließen einer Gasleitung betätigen lässt.

10. Gasmuldenbedienanordnung (20) nach Anspruch 8 oder 9, die ferner Folgendes umfasst:
eine Schutzkappe (26), die ein durchgehendes Loch (74) und eine Vertiefung (68) aufweist, und
eine Elektronikvorrichtung (28), die in der Vertiefung (68) untergebracht ist,
wobei der Kragen (40) und/oder der mindestens eine Arm (48) zumindest dann in das durchgehende Loch (74) ragt, wenn sich der ringförmige Hauptteil (44) in der Ruheposition befindet,
wobei die Vertiefung (68) zum ringförmigen Hauptteil (44) hin offen ist und
wobei der ringförmige Hauptteil (44) an der Elektronikvorrichtung (28) anliegt, wenn er sich in der Ruheposition befindet.

## Revendications

1. Dispositif de rotor (24) pour un agencement de commande de table de cuisson à gaz (20), comprenant :
un collet (40), qui forme une ouverture (42) et est configuré pour transmettre un mouvement de rotation et/ou de translation entre le dispositif de rotor (24) et un dispositif d'arbre (22) pouvant être reçu dans l'ouverture (42),
un corps annulaire (44), qui a un diamètre intérieur (D) plus grand qu'une largeur (W) de l'ouverture (42), et
au moins un bras (48) comprenant :
une section extérieure de bras (54), qui s'étend radialement vers l'intérieur à partir du corps annulaire (44),
une section intérieure de bras (50), qui s'étend radialement vers l'extérieur à partir du collet (40), et
une section centrale de bras (52), qui s'étend axialement à partir d'une extrémité radialement intérieure (58) de la section extérieure de bras (54) jusqu'à une extrémité radialement extérieure (56) de la section intérieure de bras (50).

2. Dispositif de rotor (24) selon la revendication 1, dans lequel, lorsque le collet (40) est positionné au-dessus du corps annulaire (44) dans une position montée, au moins une section de bras (50, 52, 54) présente une surface supérieure en pente (72).

3. Dispositif de rotor (24) selon l'une quelconque des revendications précédentes, dans lequel un rayon (R) allant d'un axe de rotation (A) du dispositif de rotor (24) jusqu'à une extrémité intérieure de la section extérieure de bras (54) ou jusqu'à chaque extrémité intérieure des sections extérieures de bras (54) est plus grand que la moitié de la largeur (W) de l'ouverture (42).

4. Dispositif de rotor (24) selon l'une quelconque des revendications précédentes, comprenant un espace cylindrique creux (62) dans un espace vide, qui est défini par une projection axialement parallèle de l'ouverture (42) dans le collet (40), des faces et/ou bords intérieurs des sections de bras (50, 52, 54), une face frontale (46) du collet (40) orientée vers le corps annulaire (44), et une face frontale (76) du corps annulaire (44) orientée à l'opposé du collet (40).

5. Dispositif de rotor (24) selon l'une quelconque des revendications précédentes, dans lequel la section centrale de bras (52) s'étend radialement vers l'extérieur en s'étendant de l'extrémité radialement intérieure (58) de la section extérieure de bras (54) jusqu'à une extrémité radialement extérieure (56) de la section intérieure de bras (50).

6. Dispositif de rotor (24) selon l'une quelconque des revendications précédentes, dans lequel la section intérieure de bras (50) est inclinée de sorte qu'elle s'étend à la fois radialement vers l'extérieur à partir du collet (40) et axialement en s'éloignant du corps annulaire (44).

7. Dispositif de rotor (24) selon l'une quelconque des revendications précédentes, dans lequel la section centrale de bras (52) est inclinée de sorte qu'elle s'étend radialement vers l'extérieur tout en s'étendant axialement en s'éloignant du corps annulaire (44).

8. Agencement de commande de table de cuisson à gaz (20) pour commander une table de cuisson à gaz, comprenant :
un dispositif d'arbre (22) définissant un axe de rotation (A),
un dispositif de rotor (24) selon l'une quelconque des revendications précédentes, dans lequel l'ouverture (42) du collet (40) reçoit le dispositif d'arbre (22) de façon à pouvoir tourner autour de l'axe de rotation (A) par une rotation du dispositif d'arbre (22), et dans lequel le dispositif de rotor (24) est mobile le long de l'axe de rotation (A) entre une position de repos et une position défléchie du corps annulaire (44), et
un dispositif de ressort (32), qui est agencé radialement entre le dispositif d'arbre (22) et la section extérieure de bras (54) ou des sections extérieures de bras (54) du dispositif de rotor (24), et qui précontraint le dispositif de rotor (24) de la position défléchie vers la position de repos, et
un dispositif de commutateur d'allumage (30), qui est configuré pour alimenter de l'électricité à un dispositif d'allumage dans un état où le corps annulaire (44) est dans la position défléchie.

9. Agencement de commande de table de cuisson à gaz (20) selon la revendication 8, comprenant en outre un dispositif de soupape (34), qui est configuré pour être actionné par une rotation du dispositif d'arbre (22) pour ouvrir ou fermer un passage de gaz.

10. Agencement de commande de table de cuisson à gaz (20) selon la revendication 8 ou 9, comprenant en outre :
un capuchon de protection (26), qui comporte un trou traversant (74) et une cavité (68), et un dispositif d'électronique (28), qui est logé dans la cavité (68),
dans lequel le collet (40) et/ou l'au moins un bras (48) s'avance dans le trou traversant (74) au moins lorsque le corps annulaire (44) est dans la position de repos, dans lequel la cavité (68) s'ouvre vers le corps annulaire (44), et
dans lequel le corps annulaire (44) est adjacent au dispositif d'électronique (28) lorsque le corps annulaire (44) est dans la position de repos.
